# EUROPEAN PATENT SPECIFICATION

(11) **EP 3 184 813 B1**
(45) Date of publication and mention of the grant of the patent: **05.02.2020**
(21) Application number: 16002663.9
(22) Date of filing: 15.12.2016
(51) Int. Cl.: F03D 13/25, F03D 5/00, F03D 1/00, B63B 35/44

(54) **OFFSHORE FLOATING INFRASTRUCTURE FOR EXPLOITING WIND ENERGY**
SCHWIMMENDE OFFSHORE-INFRASTRUKTUR ZUR NUTZUNG VON WINDKRAFT
INFRASTRUCTURE FLOTTANTE EN MER DESTINÉE À EXPLOITER L'ÉNERGIE ÉOLIENNE

(30) Priority: 24.12.2015 IT UB20159172
(43) Date of publication of application: 28.06.2017
(73) Proprietor: Kite Gen Research S.R.L., 10099 San Mauro Torinese (TO) (IT)
(72) Inventor: Ippolito, Massimo, I-10099 SAN Mauro Torinese (TO) (IT)
(74) Representative: Garavelli, Paolo

(56) References cited:
- EP-A2- 0 074 938
- WO-A1-2010/143214
- DE-U1- 29 908 897
- US-A1- 2015 275 850

## Description

The present invention refers to an offshore floating infrastructure for exploiting wind energy.

In particular, the present invention refers to an infrastructure to be placed in an open sea for generating energy, through renewable sources, through wind turbines on offshore towers, with rotation axis along the wind direction and vertically mobile following the waves.

The prior art related to offshore infrastructures for generating electric Energy starting from wind is represented by several patents, in particular dealing with systems for ensuring a stable floating of their carrier structures.

For example, EP-B1-1881927 deals with a floating installation of wind turbines comprising a floating cell, a tower arranged on the floating cell, a generator assembled on the tower, the generator being rotatable with respect to the wind direction, a wind rotor assembled on the generator and an anchoring system comprising a plurality of anchoring lines, whose ends are fastened to respective anchoring points and to the floating cell through further pairs of outwardly inclined lines, in order to create a delta-shaped arrangement.

A first problem with such solution is that an anchoring system of such floating infrastructures implies the use of floating cells with a high weight, to be able to lower the barycentre and at the same time balance the straining force induced by wind on the rotor placed above the tower.

Moreover, floating infrastructures for exploiting wind energy composed of power generators along the wind direction have a second problem, linked to a scarce value of the index for exploiting the plant, such index being given by the ratio: actual operating hours with respect to plant stop hours.

The prior art allows solving this second problem by using offshore infrastructures for generating electric energy starting from wind, wherein a power generator is connected to kites operating in the troposphere. In fact, kites in the troposphere can cover a wider time band during the interaction with winds at a troposphere height, allowing to increase the value of such index for exploiting the plant.

For example, patent document WO2010143214 discloses an offshore infrastructure of a troposphere wind generator comprising at least one floating platform adapted to support a troposphere wind generator actuated by kites connected with ropes and at least one mooring rope anchored on the sea bottom. The mooring rope is connected to the floating platform in a point next to the power generator, so that the mooring lines and the control cables of the kites tend to be aligned under a load, limiting the overturning moment on the platform. Moreover, such offshore infrastructure allows the floating platform to be oriented and dragged by the combined traction action acting on the control cables of the kite, of wind and of sea currents.

Object of the present invention is solving the above prior art problems, by providing an optimum combination of the solutions of a wind generator with rotor and a troposphere wind generator.

A further object is increasing the production of energy through alternative energy sources.

A further object is allowing to restore the existing park of offshore infrastructures of wind energy with rotors and turbines, adding a wind generator with troposphere kites.

The above and other objects and advantages of the invention, as will appear from the following description, are obtained with an offshore floating infrastructure for exploiting wind energy as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears form the enclosed claims.

The present invention will be better described by some preferred embodiments thereof, provided as a non-limiting example, with reference to the enclosed drawings, in which:
Figure 1 shows a schematic perspective view of a first example of the offshore floating infrastructure according to the present invention;
Figure 2 shows a schematic perspective view of a second example of the offshore floating infrastructure according to the present invention;
Figure 3 shows a schematic perspective view of a third example of the offshore floating infrastructure according to the present invention;
Figure 4 shows a schematic perspective view of an embodiment of the offshore floating infrastructure according to the present invention; and
Figure 5 shows an axonometric view of an enlarged part of the embodiment of Figure 4.

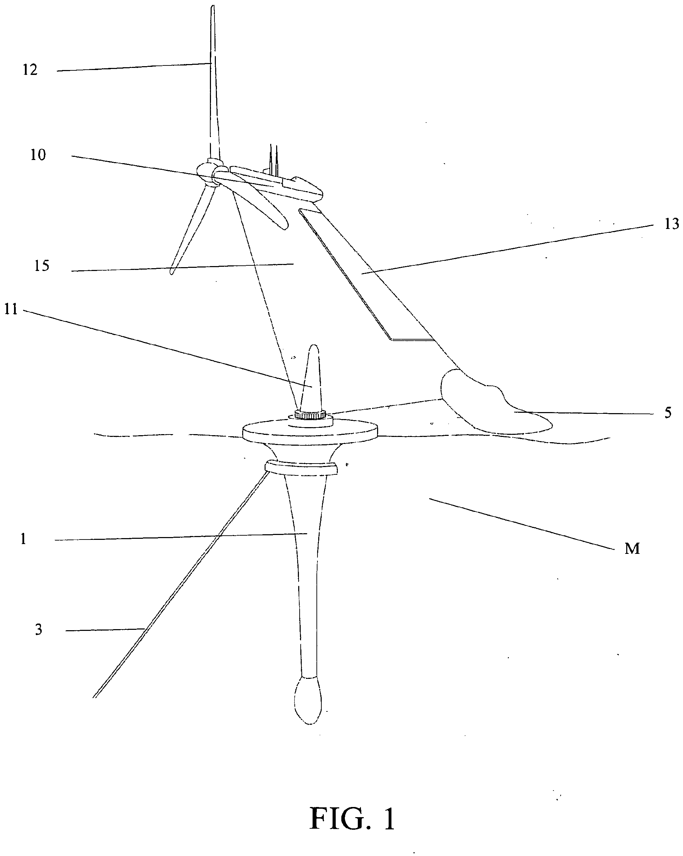

With reference to Figure 1, which shows a first example thereof, an offshore floating infrastructure for exploiting wind energy substantially comprises:
- an elongated floating element 1 adapted to rotate around and move along its own axis in a substantially vertical direction with respect to the liquid mass M (commonly sea) wherein the elongated floating element 1 is immersed and floats;
- a tower 11 arranged on and coaxial with the floating element 1;

- a first power generator 10 operatively connected to the tower 11, wherein such first power generator 10 is rotating around the axis of the floating element 1 being pushed by the wind force; and
- a wind rotor 12 assembled on the first power generator 10, everything aimed, in a known way, to transform wind energy into electric energy.

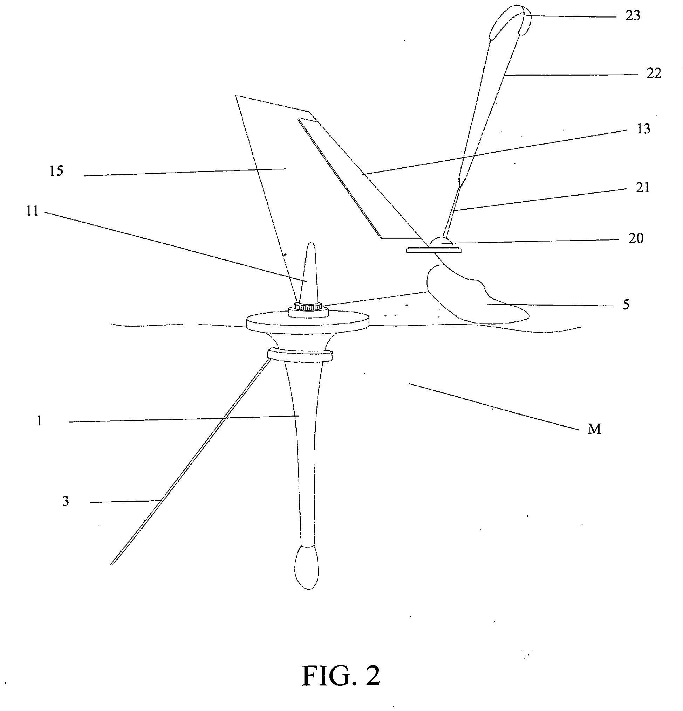

With reference now to Figure 2, which shows a second example thereof, an offshore floating infrastructure for exploiting wind energy substantially comprises:
- an elongated floating element 1 adapted to rotate around and move along its own axis in a substantially vertical direction with respect to the liquid mass M (commonly sea) wherein the elongated floating element 1 is immersed and floats;
- a tower 11 arranged on and coaxial with the floating element 1;
- a second power generator 20 operatively connected to the floating element 1, wherein the second power generator 20 is rotating around the axis of the floating element 1 being pushed by the wind force; the second power generator 20 is equipped with at least one oscillating arm 21 interacting with a system of ropes 22, where the system of ropes 22 is adapted to connect the second power generator 20 to at least one power kite 23, everything aimed, in a known way, to transforming wind energy into electric energy.

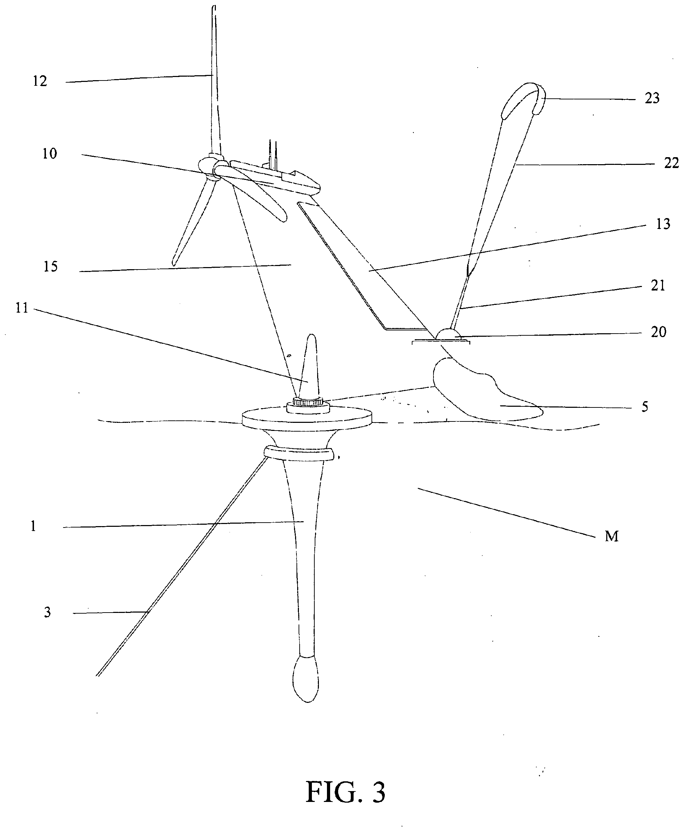

With reference now to Figure 3, which shows a third example thereof, with respect to the first example shown in Figure 1, an infrastructure comprises the second power generator 20 operatively connected to the floating element 1, wherein the second power generator 20 is rotating around the axis of the floating element 1 being pushed by the wind force; as before, the second power generator 20 is equipped with at least one oscillating arm 21 interacting with a system of ropes 22, such system of ropes 22 being adapted to connect the second power generator 20 to at least one power kite 23 to obtain, in a known way, the conversion of wind energy into electric energy.

In one of the three preferred configurations as described above, the first power generator 10 and/or the second power generator 20 preferably integrally lie on a wing 15 equipped with a keel 5, adapted to be partly submersed in the liquid M and overlapping the floating element 1: such keel 5 is adapted to reduce the drift of the submersed part with respect to the wind direction.

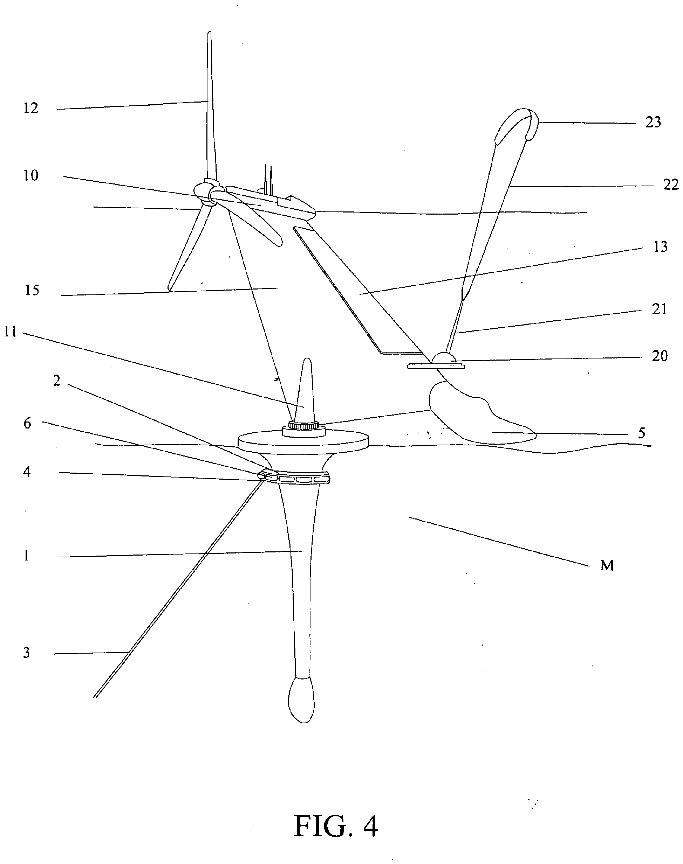

According to the preferred embodiment of the infrastructure according to the present invention, shown in Figure 4, it further comprises at least one rotation enabling element 2 placed around the floating element 1 and immersed in the liquid M: such rotation enabling element 2 comprising means 6 adapted to allow the possible rotation of the floating element 1 around its own axis (in addition to the vertical movement given by the waves of the liquid M), should this be required by the particular application wherein the inventive infrastructure has to operate.

In particular, the above described infrastructure can further be equipped with an anchoring system comprising a rope 3 having an end fastened to an anchoring point in the liquid M (the anchoring point can be fastened to the sea bottom, or be an anchor or a ballast) and another end equipped with a junction point 4 connected to the floating element 1, in order to guarantee the immovability of the infrastructure if it is required by the application to which it is subjected.

In an innovative way, the above junction point 4 Belongs to the rotation enabling element 2 to allow balancing the overturning moment induced by the wind force of the wind rotor 12 with the stabilizing moment induced by the wind force of the kite 23; the rope 3 is approximately aligned with the system of ropes 22.

For a better operating balance, the wing 15 can be equipped with at least one aileron 13 adapted to contrast the transverse dynamic disturbances to which the infrastructure can be subjected.

In the preferred configuration, the first power generator 10 and the second power generator 20 lie on the longitudinal axis of symmetry of the wing 15, as shown.

Moreover, in order to further improve the operating balance, the above described infrastructure can be equipped with a plurality of ailerons (not shown) connected to the floating element 1 in an opposite position with respect to the tower 11 (namely deeply immersed in the liquid M): these ailerons are adapted to control the vertical floating of the infrastructure during its operation.

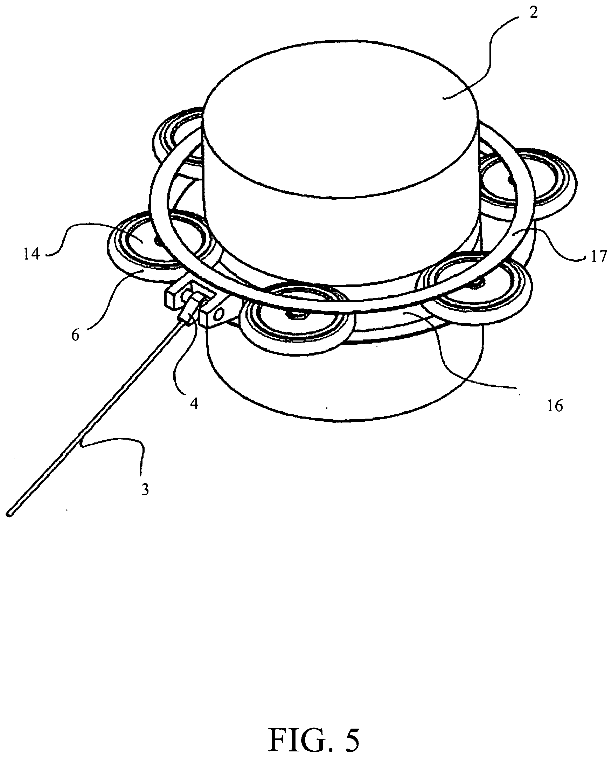

With reference now to Figure 5, the rotation enabling element 2, in its preferred, but not limiting, operating configuration, comprises a rotary ring 17 and a series of wheels 14 equipped with rubber tires 6. The wheels 14 roll in a groove 16 and the rope 3 is directly connected to the rotation enabling element 2 through the junction point 4.

The offshore floating infrastructure for exploiting wind energy of the present invention allows reaching the above stated objects.

The combination of a power generator through a wind rotor or turbine with a power generator through troposphere kites allows obtaining two advantages: a first advantage is given by that the use coefficient of the infrastructure increases due to the operation of the kite in time bands in which the wind rotor is unmoving; a second advantage is given by that the force induced by such kite allows creating a balancing moment of the overturning moment typical of an infrastructure of wind rotors only above a respective tower.

In this way, it is possible to make an infrastructure wherein the floating cell must not necessarily have a heavy weight and big sizes.

The rotation enabling element of the shuttle of the rotor-type wind generator cannot be found above the tower, and instead can be found at the keel height, according to a simplified architecture, with a strongly reduced cost.

## Claims

1. Offshore floating infrastructure for exploiting wind energy, comprising:
- an elongated floating element (1) adapted to rotate around and move along its own axis in a substantially vertical direction with respect to a liquid mass (M) wherein said elongated floating element (1) is immersed and floats;
- a tower (11) arranged on and coaxial with said floating element (1);
- a first power generator (10) operatively connected to said tower (11), said first power generator (10) being rotating around the axis of said floating element (1) being pushed by the wind force;
- a wind rotor (12) assembled on said first power generator (10); and
- a second power generator (20) operatively connected to said floating element (1), said second power generator (20) being rotating around the axis of said floating element (1) being pushed by the wind force, said second power generator (20) being equipped with at least one oscillating arm (21) interacting with a system of ropes (22), said system of ropes (22) adapted to connect said second power generator (20) to at least one power kite (23);
- at least one rotation enabling element (2) placed around said floating element (1) and immersed in the liquid (M), said at least one rotation enabling element (2) comprising means (6) adapted to allow a possible rotation of said floating element (1) around its own axis, said rotation enabling element (2) comprising a rotary ring (17) and a series of wheels (14) equipped with rubber tires (6), said wheels (14) rolling in a groove (16) and said rope (3) being directly connected to said rotation enabling element (2) through said junction point (4), said junction point (4) belonging to said rotation enabling element (2) to allow balancing the overturning moment induced by the wind force of said wind rotor (12) with the stabilizing moment induced by the wind force of said at least one kite (23), said rope (3) being approximately aligned with said system of ropes (22).
**characterized in that** said first power generator (10) and said second power generator (20) integrally lie on a wing (15) equipped with a keel (5), adapted to be partly submersed in the liquid (M) and overlapping said floating element (1), said keel (5) being adapted to reduce the drift of the submersed part with respect to the wind direction.

2. Infrastructure according to claim 1, **characterized in that** it is further equipped with an anchoring system comprising a rope (3) having an end fastened to an anchoring point in the liquid (M) and another end equipped with said junction point (4) connected to said floating element (1).

3. Infrastructure according to any one of claims 1 to 3, **characterized in that** said wing (15) is equipped with at least one aileron (13) adapted to contrast the transverse dynamic disturbances to which said infrastructure is subjected.

4. Infrastructure according to any one of the previous claims, **characterized in that** said first power generator (10) and said second power generator (20) lie on a longitudinal axis of symmetry of said wing (15).

5. Infrastructure according to any one of the previous claims, **characterized in that** it is equipped with a plurality of ailerons connected to said floating element (1) in an opposite position with respect to said tower (11), said ailerons being adapted to control the vertical floating of said infrastructure.

## Patentansprüche

1. Schwimmende Offshore-Infrastruktur für die Nutzung der Windenergie, die Folgendes enthält:
- ein längliches schwimmendes Element (1), das dazu dient, sich um seine Achse zu drehen und längs dieser in einer grundlegend vertikalen Richtung gegenüber einer flüssigen Masse (M) zu bewegen, in der das genannte längliche schwimmende Element (1) eingetaucht wird und schwimmt;
- einen Turm (11), der auf dem genannten schwimmenden Element (1) angeordnet ist und koaxial zu diesem liegt;
- einen ersten Leistungsgenerator (10), der für den Betrieb mit dem genannten Turm (11) verbunden ist, der genannte erste Leistungsgenerator (10) dreht sich um die Achse des genannten schwimmenden Elements (1), wobei er von der Windkraft vorgeschoben wird; und
- einen Windrotor (12), der auf dem genannten ersten Leistungsgenerator (10) montiert ist; und
- einen zweiten Leistungsgenerator (20), der für den Betrieb mit dem genannten schwimmenden Element (1) verbunden ist, der genannte zweite Leistungsgenerator (20) dreht sich um die Achse des genannten schwimmenden Elements (1), wobei er von der Windkraft vorgeschoben wird, der genannte zweite Leistungsgenerator (20) ist mit mindestens einem Schwenkarm (21) ausgestattet, der mit einem Seilsystem (22) interagiert, das genannte Seilsystem (22) dient dazu, den genannten zweiten Leistungsgenerator (20) mit mindestens einem leistungsstarken Flügelprofil (23) zu verbinden;
- mindestens ein Element für die Aktivierung der Drehung (2), das im Bereich des genannten schwimmenden Elements (1) angebracht ist und in die Flüssigkeit (M) eingetaucht wird, das genannte mindestens eine Element für die Aktivierung der Drehung (2) enthält Mittel (6), die dazu dienen, eine mögliche Drehung des genannten schwimmenden Elements (1) um seine eigene Achse zu ermöglichen, das genannte Element zur Aktivierung der Drehung (2) enthält einen Drehring (17) und mehrere Räder (14), die mit Gummireifen (6) ausgestattet sind, die genannten Räder (14) rollen in einer Rille (16), und das genannte Seil (3) ist direkt mit dem genannten Element für die Aktivierung der Drehung (2) durch den genannten Verbindungspunkt (4) verbunden, der genannte Verbindungspunkt (4) gehört zum genannten Element für die Aktivierung der Drehung (2), um den Ausgleich des Kippmoments zu ermöglichen, der durch die Windkraft des genannten Windrotors (12) mit dem Stabilisierungsmoment eingeleitet wird, welcher durch die Windkraft des genannten mindestens einen leistungsstarken Flügelprofils (23) eingeleitet wird, das genannte Seil (3) ist annäherungsweise mit dem genannten Seilsystem (22) ausgerichtet;
und **dadurch gekennzeichnet ist, dass** der genannte erste Leistungsgenerator (10) und der genannte zweite Leistungsgenerator (20) einteilig auf einem Flügel (15) liegen, der mit einem Kiel (5) ausgestattet ist, der dazu dient, in die Flüssigkeit (M) eingetaucht zu werden und das genannte schwimmende Element (1) überragt, der genannte Kiel (5) dient dazu, die Abdrift des eingetauchten Teils gegenüber der Windrichtung zu reduzieren.

2. Infrastruktur gemäß Patentanspruch 1, die **dadurch gekennzeichnet ist, dass** sie außerdem mit einem Verankerungssystem ausgestattet ist, das ein Seil (3) enthält, welches ein Ende hat, das an einem Verankerungspunkt in der Flüssigkeit (M) befestigt ist, und ein anderes Ende, das mit einem Verbindungspunkt (4) ausgestattet ist, der mit dem genannten schwimmenden Element (1) verbunden ist.

3. Infrastruktur gemäß einem beliebigen der Patentansprüche von 1 bis 2, die **dadurch gekennzeichnet ist, dass** der genannte Flügel (15) mit mindestens einem Querruder (13) ausgestattet ist, das dazu dient, den transversalen dynamischen Störungen entgegenzuwirken, denen die genannte Infrastruktur ausgesetzt wird.

4. Infrastruktur gemäß einem beliebigen der vorhergehenden Patentansprüche, die **dadurch gekennzeichnet ist, dass** der genannte erste Leistungsgenerator (10) und der genannte zweite Leistungsgenerator (20) auf der Längssymmetrieachse des genannten Flügels (15) liegen.

5. Infrastruktur gemäß einem beliebigen der vorhergehenden Patentansprüche, die **dadurch gekennzeichnet ist, dass** sie mit mehreren Querrudern ausgestattet ist, die mit dem genannten schwimmenden Element (1) in einer entgegengesetzten Position zum genannten Turm (11) verbunden sind, die genannten Querruder dienen dazu, das vertikale Schwimmen der genannten Infrastruktur zu steuern.

## Revendications

1. Infrastructure flottante offshore pour l'exploitation d'énergie éolienne, comprenant :
- un élément flottant allongé (1) apte à tourner autour et à se déplacer le long de son axe dans une direction essentiellement verticale par rapport à une masse de liquide (M) où l'élément flottant allongé (1) est immergé et flotte ;
- une tour (11) disposée sur l'élément flottant (1) et coaxiale par rapport à ce dernier ;
- un premier générateur d'énergie (10) relié fonctionnellement à la tour (11), le premier générateur d'énergie (10) tourne autour de l'axe de l'élément flottant (1) où il est poussé par la force du vent ; et
- un rotor de l'éolienne (12) monté sur le premier générateur d'énergie (10) ; et
- un second générateur d'énergie (20) relié fonctionnellement à l'élément flottant (1) ; le second générateur d'énergie (20) tourne autour de l'axe de l'élément flottant (1) où il est poussé par la force du vent ; le second générateur d'énergie (20) est doté au moins d'un bras oscillant (21) qui interagit avec un système de câbles (22) ; le système de câbles (22) est apte à relier le second générateur d'énergie (20) à une surface portante (23) au moins;
- au moins un élément d'activation de la rotation (2) placé autour de l'élément flottant (1) et immergé dans le liquide (M) ; ce premier élément d'activation de la rotation (2) comprend des moyens (6) aptes à permettre une rotation possible de l'élément flottant (1) autour de son axe ; ce premier élément d'activation de la rotation (2) comprend un anneau tournant (17) et une série de roues (14) dotées de pneus en caoutchouc (6) ; les roues (14) glissent dans une rainure (16), alors qu'un câble (3) est relié directement à l'élément d'activation de la rotation (2) au niveau d'un point de jonction (4) appartenant à cet élément (2), cela permet l'équilibrage entre le moment de renversement du rotor de l'éolienne (12) induit par la force du vent et le moment de stabilisation d'une surface portante (23) induit par le force du vent ; le câble (3) est aligné approximativement avec le système de câbles (22) ;
**caractérisée en ce que** le premier générateur d'énergie (10) et le second générateur d'énergie (20) reposent solidement sur une aile (15) dotée d'une quille (5), apte à être partiellement submergée dans le liquide (M) et placée au-dessus de l'élément flottant (1) ; la quille (5) est apte à réduire la dérive de la partie submergée par rapport à la direction du vent.

2. Infrastructure, selon la revendication 1, **caractérisée en ce qu'**elle est aussi dotée d'un système d'ancrage composé d'un câble (3) dont une extrémité est fixée à un point d'ancrage dans le liquide (M) et l'autre extrémité est dotée d'un point de jonction (4) relié à l'élément flottant (1).

3. Infrastructure, selon l'une des revendications de 1 à 2, **caractérisée en ce que** l'aile (15) est munie au moins d'un aileron (13) apte à contrer les perturbations dynamiques transversales auxquelles est soumise l'infrastructure.

4. Infrastructure, selon l'une des revendications précédentes, **caractérisée en ce que** le premier générateur d'énergie (10) et le second générateur d'énergie (20) se trouvent sur l'axe de symétrie longitudinal de l'aile (15).

5. Infrastructure, selon l'une des revendications précédentes, **caractérisée en ce qu'**elle est dotée d'une pluralité d'ailerons reliés à l'élément flottant (1) en position opposée par rapport à la tour (11) ; ces ailerons sont aptes à contrôler la flottaison verticale de l'infrastructure.
